(19) Europäisches Patentamt
European Patent Office
Office européen des brevets

(11) EP 2 837 943 A1

(12) EUROPEAN PATENT APPLICATION

(43) Date of publication:
18.02.2015 Bulletin 2015/08

(51) Int Cl.:
G01R 31/36 (2006.01)     H02J 7/02 (2006.01)

(21) Application number: 13180695.2

(22) Date of filing: 16.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 12.08.2013 US 201313964331

(71) Applicant: O2Micro, Inc.
Santa Clara, CA 95054 (US)

(72) Inventors:
• Wang, James
San Jose, CA California 95130 (US)

• Zhang, Weihua
610041 Chengdu Sichuan (CN)
• Zou, Jinghua
610041 Chengdu Sichuan (CN)
• Peng, Xinsheng
430074 Wuhan Hubei (CN)

(74) Representative: Lippert, Stachow & Partner
Patentanwälte
Postfach 30 02 08
51412 Bergisch Gladbach (DE)

(54) **System and method for controlling a battery**

(57)     System and method for controlling a battery are disclosed. The system includes a battery pack, a wireless charger, a detecting module, a measuring device and a controller. The wireless charger is configured for charging the battery pack and calculating a first charging capacity of the battery pack. The detecting module coupled to the wireless charger, is configured for detecting information associated with the charging. The measuring device is configured for calculating a second charging capacity of the battery pack. The controller is coupled to the wireless charger, the detecting module and the measuring device. The controller is configured for determining whether there is a difference between the first charging capacity and the second charging capacity. The controller is also configured for calculating a third charging capacity of the battery pack based on the information associated with the charging and the difference. The controller is also configured for adjusting the second charging capacity based on the third charging capacity.

FIG. 5

**Description**

FIELD OF THE PRESENT TEACHING

The present teaching relates generally to a field of electricity and power systems, specifically, the present teaching is directed to systems and methods for controlling a battery.

BACKGROUND

The increasing demand and prevalence of battery-powered devices and technologies has led to the development of smart battery systems, which simplify the design of independent battery systems utilized in such devices. These smart battery systems are embedded not only in laptop computers, but also in a number of other applications, including as vehicles, security systems, anti-counterfeiting devices, medical equipments, and other portable electronic devices.

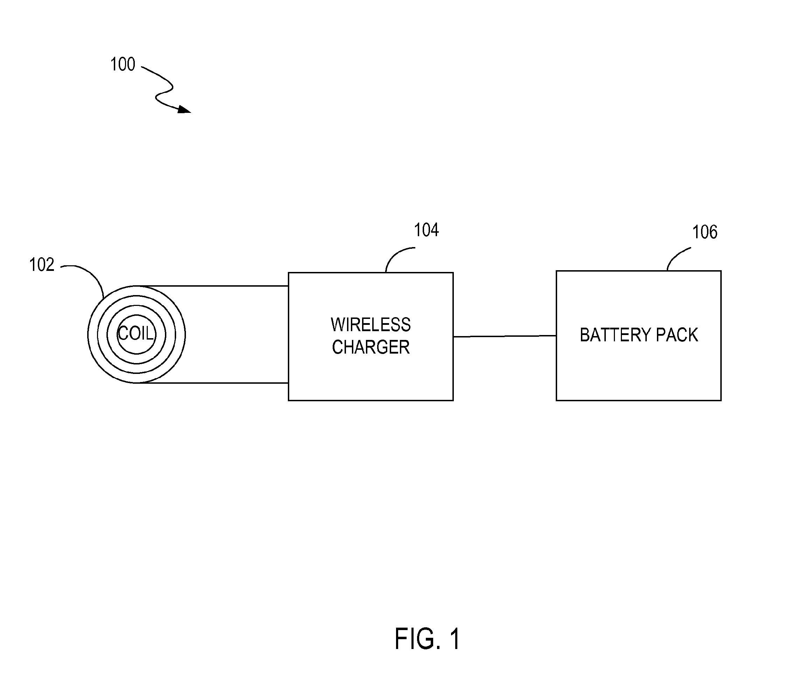

FIG. 1 illustrates a conventional smart battery system 100, which generally include a coil 102, a wireless charger 104, and a battery pack 106. In most conventional smart battery systems, a coil 102 is configured for converting power supplied by a power source (not shown in FIG. 1) into electromagnetic signals. A wireless charger 104 is coupled to a battery pack 106 and is configured for generating charging power for the battery pack 106 induced by the electromagnetic signals. The wireless charger 104 may calculate a charging capacity during a charging process.

Due to energy constraints, the wireless charger 104 in a conventional smart battery system 100 can only calculate a rough charging capacity. This rough estimation is not accurate enough for a user to reliably monitor the charging process or to estimate remaining charging time based on the calculated charging capacity. Moreover, if the wireless charger 104 is not in operation or otherwise not functioning, in which case the battery pack is not being charged, a user operating a device powered by a smart battery system is unable to accurately determine the capacity of the battery pack 106 and risks losing important data should the battery fail before the user has had the opportunity to save his or her work.

Therefore, there is a need for a system and method that provides an accurate measure of battery capacity, not only when the battery is charging, but also when the battery is not charging.

SUMMARY

The embodiments described herein relate to methods, devices, and systems for controlling a battery.

In an embodiment, a system for controlling a battery is disclosed. The system includes a battery pack, a wireless charger, a detecting module, a measuring device and a controller. The wireless charger is configured for charging the battery pack and calculating a first charging capacity of the battery pack. The detecting module coupled to the wireless charger, is configured for detecting information associated with the charging. The measuring device is configured for calculating a second charging capacity of the battery. The controller is coupled to the wireless charger, the detecting module and the measuring device. The controller is configured for determining whether there is a difference between the first charging capacity and the second charging capacity. The controller is also configured for calculating a third charging capacity of the battery pack based on the difference and the information associated with the charging and adjusting the second charging capacity based on the third charging capacity.

In another embodiment, a method for controlling a battery system is disclosed. The method comprises calculating a first charging capacity by a wireless controller in the battery system and calculating a second charging capacity by a measuring device in the battery system when a battery pack in the battery system is during a charging process; calculating a difference between the first charging capacity and the second charging capacity; and adjusting the second charging capacity when the difference is greater than a second threshold.

In yet another embodiment, a controller for controlling a battery system is disclosed. The controller comprises a determining unit and a capacity calculation unit. The determining unit is configured for calculating a difference between a first charging capacity calculated by a wireless charger in the battery system and a second charging capacity calculated by a measuring device coupled to the controller. The determining unit is also configured for determining whether the difference is greater than a second threshold if the wireless charger is charging a battery pack in the battery system. The capacity calculation unit is configured for calculating a third charging capacity based on information associated with the charging. The third charging capacity is used for adjusting the second charging capacity by the capacity calculation unit if the determining unit determines that the difference is greater than the second threshold.

Further, in the controller, the measuring device may be configured for using the third charging capacity to replace the second charging capacity when the difference between the first charging capacity and the second charging capacity is greater than the threshold.

Further, the controller may be configured for generating a warning signal indicating that the battery system is about to shut down if the battery pack is not during a charging process and if a remaining capacity of the battery pack is less than a second threshold. In addition, the controller may further comprise a multiple safety level control unit configured for determining whether any abnormality has occurred and for performing one or more corresponding operations. Further, in the controller, multiple determining standards are predetermined and stored in the multiple safety level control unit, and the multiple safety level control unit is configured for determining whether any abnormality has occurred based on each of the multiple determining standards and for performing one or more corresponding operations if any abnormality has occurred.

Additional benefits and novel features will be preset forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentalities and combinations set forth in the detailed description set forth below.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 illustrates a conventional battery system;

FIG. 2 illustrates an exemplary block diagram of a battery system, in accordance with an embodiment of the present teaching;

FIG. 3 illustrates an exemplary block diagram of a controller, in accordance with an embodiment of the present teaching;

FIG. 4 illustrates an exemplary block diagram of a measuring device, in accordance with an embodiment of the present teaching; and

FIG. 5 is a flowchart illustrating a method for controlling a battery system, in accordance with an embodiment of the present teaching.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

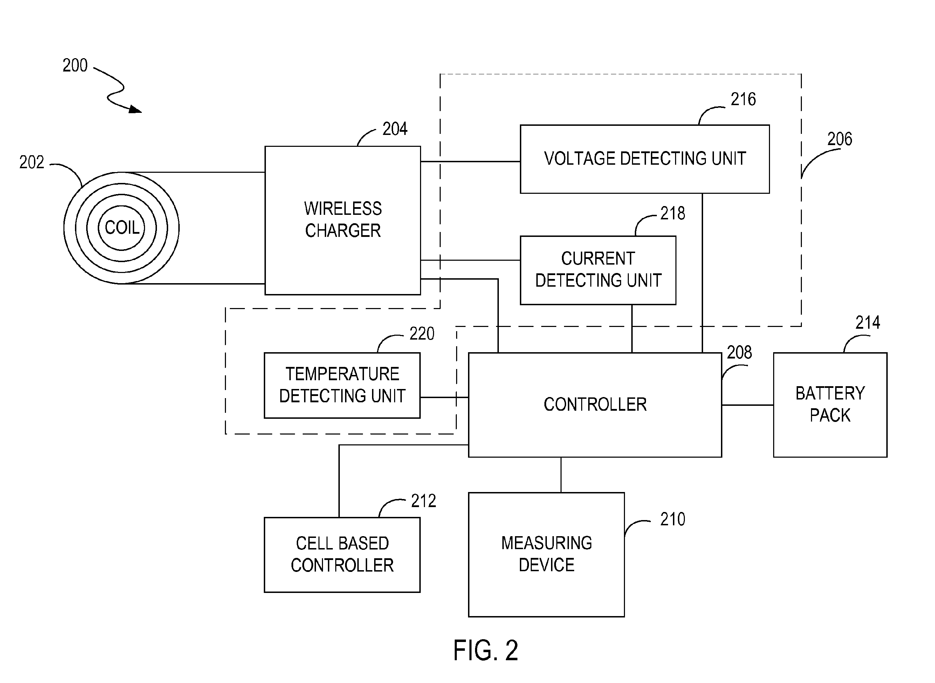

FIG. 2 illustrates a block diagram of a battery system 200, in accordance with an embodiment of the present teaching. As shown in FIG. 2, the battery system 200 includes a coil 202, a wireless charger 204, a detecting module 206, a controller 208, a measuring device 210, a cell based controller 212 and a battery pack 214. The detecting module 206 includes a voltage detecting unit 216, a current detecting unit 218 and a temperature detecting unit 220. The coil 202 is configured for converting electronic power supplied by a power source (not shown in FIG. 2) into electromagnetic signals. The wireless charger 204 is coupled to the battery pack 214 and is configured for generating charging power induced by the electromagnetic signals for charging the battery pack 214. The wireless charger 204 is also configured for calculating a first charging capacity during a charging process of the battery pack 214. The detecting module 206 is coupled to the wireless charger 204 and is configured for detecting charging information during the charging process. The measuring device 210 is configured for calculating a second charging capacity during the charging process of the battery pack 214. For example, the measuring device 210 can be a gauge. The controller 208 is coupled to the detecting module 206 and the measuring device 210. The controller 208 is configured for acquiring the charging information from the detecting module 206, and for calculating a third charging capacity of the battery pack 214 based on the charging information and for amending the second charging capacity if necessary.

In one embodiment, the coil 202 converts electronic power supplied by a power source (not shown in FIG. 2) into electromagnetic signals. Inducing the electronic signals, the wireless charger 204 generates charging power to charge the battery pack 214. The detecting module 206 of this embodiment detects in real-time the charging information. The charging information may include information associated with charging, such as charging voltage, charging current, temperature and charging time. More specifically, the voltage detecting unit 216 of this embodiment coupled to the wireless charger 204 detects the charging voltage U of the battery pack 214. The current detecting unit 218 of this embodiment coupled to the wireless charger 204 detects the charging current I of the battery pack 214. The temperature detecting unit 220 receives temperature information from thermal resistors attached on both positive and negative terminals of each battery cell in the battery pack 214 and calculates temperature of each battery cell based on received temperature information. The measuring device 210 of this embodiment calculates charging capacity of the battery pack 214. The cell based controller 212 of this embodiment controls and adjusts the charging current and charging voltage based on the charging characteristic of each battery cell. The charging characteristic may be reflected by a charging curve which shows how a charging voltage of a battery cell changes with time during the charging process. The controller 208 is coupled to the battery pack 214, and detects status information of the battery pack 214, such as the temperature information and the charging characteristic of each battery cell (e.g., a charging curve graph). Moreover, the controller 208 is coupled to the detecting module 206, the measuring device 210 and the cell based controller 212 for communicating with the detecting module 206, the measuring device 210 and the cell based controller 212 and for performing corresponding operations. For example, the controller 208 of this embodiment transmits the detected charging curve to the cell based controller 212. The cell based controller 212 calculates a desired charging voltage and a desired charging current fit for each battery cell and feeds back the desired charging voltage and the desired charging current to the controller 208. The controller 208 communicates with the wireless charger 204 for controlling the wireless charger 204 to charge the battery pack 214 with the desired charging voltage and the desired charging current.

In one embodiment, the measuring device 210 detects the status of the wireless charger 204 (e.g., whether the battery pack 214 is being charged by the wireless charger 204). If the wireless charger 204 is not in operation (e.g., the battery pack 214 is not being charged by the wireless charger 204), the measuring device 210 receives power from the battery pack 214 and may calculate a remaining capacity $Q_{remain}$ of the battery pack 214. When the remaining capacity $Q_{remain}$ drops below to a first threshold $Q_1$, the controller 208 generates a warning signal, and the measuring device 210 shuts down the whole battery system 200.

If the measuring device 210 detects that the wireless charger 204 is in operation (e.g., the battery pack 214 is being charged), the measuring device 210 receives power from the wireless charger 204 instead of the battery pack 214. Then each of the measuring device 210 and the wireless charger 204 may calculate a charging capacity of the battery pack 214. A first charging capacity $O_{charger}$ calculated by the wireless charger 204 and a second charging capacity $Q_{gauge}$ calculated by the measuring device 210 are both transmitted to the controller 208. The conversion accuracy of an analog/digital (A/D) convertor in the wireless charger 204 may be different from the conversion accuracy of an A/D convertor in the measuring device 210. The difference of the conversion accuracy of A/D convertors in the wireless charger 204 and the measuring device 210 can cause a difference between the first charging capacity $Q_{charger}$ and the second charging capacity $Q_{gauge}$. The controller 208 may calculate the difference between the first charging capacity $Q_{charger}$ and the second charging capacity $Q_{gauge}$ at a predetermined time interval. For example, the predetermined time interval can be 50ms. Then the controller 208 may compare the difference between the first charging capacity $Q_{charger}$ and the second charging capacity $Q_{gauge}$ with a second threshold $Q_2$. If the difference is less than the second threshold $Q_2$, the controller 208 determines that there is no need to amend the second charging capacity $Q_{gauge}$ calculated by the measuring device 210. If the difference is greater than the second threshold $Q_2$, the controller 208 determines that the amendment of the second charging capacity $Q_{gauge}$ is necessary.

In one embodiment, the controller 208 receives information from the current detecting unit 218 indicating the charging current I. The controller 208 also receives charging time t recorded by a timer (not shown in FIG. 2). In this embodiment, the controller 208 includes an A/D convertor whose conversion accuracy is higher than the conversion accuracy of the A/D convertors in the wireless charger 204 and in the measuring device 210. For example, the A/D convertor in the controller 208 may have a conversion accuracy of $5V/2^{12}$. The controller calculates the third charging capacity $Q_{control}$ based on an equation (1) represented by: $Q_{control} = \oint_0^t I(t)$  (1)

where t represents the charging time, and I represents the charging current.

If the controller 208 determines that it is necessary to adjust or amend the second charging capacity $Q_{gauge}$, the controller 208 transmits the third charging capacity $Q_{control}$ to the measuring device 210. The measuring device 210 receives the third charging capacity $Q_{control}$ and amends the second charging capacity $Q_{gauge}$ by replacing the second charging capacity $Q_{gauge}$ with the third charging capacity $Q_{control}$.

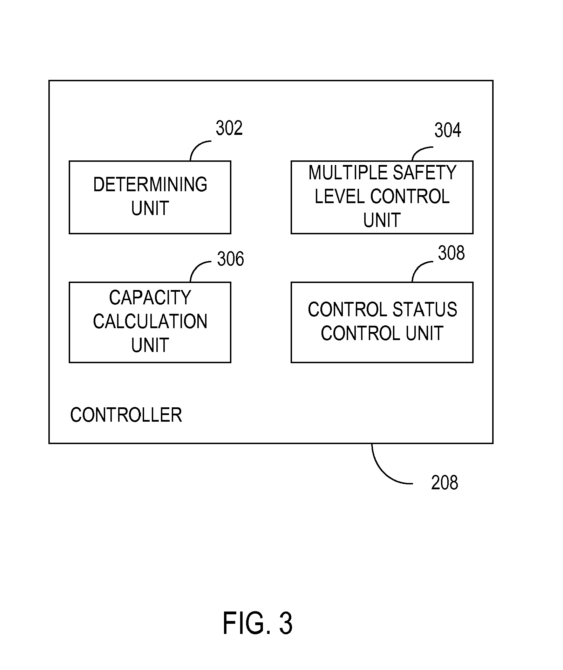

FIG. 3 illustrates an exemplary block diagram of the controller 208 in FIG. 2, in accordance with an embodiment of the present teaching. Elements that are labeled with the same numerals in FIGs. 2 and 3 have similar functions. FIG. 3 may be described in combination with FIG. 2. As shown in FIG. 3, the controller 208 includes a determining unit 302, a multiple safety level control unit 304, a capacity calculation unit 306 and a charging status control unit 308.

In one example, if the battery pack 214 is not in the process of being charged, and the remaining capacity $Q_{remain}$ of the battery pack 214 is less than the first threshold $Q_1$, the charging status control unit 308 generates a warning signal indicating that the whole battery system 200 is about to shut down.

In another example, if the battery pack 214 is in the process of being charged, the capacity calculation unit 306 receives information from the current detecting unit 306 indicating the charging current I and receives charging time t recorded by a timer (not shown in FIG. 3). The capacity calculation unit 306 then calculates the third charging capacity $Q_{control}$ based on the charging current I and the charging time t. The determining unit 302 receives the first charging capacity $Q_{charger}$ from the wireless charger 204 and the second charging capacity $Q_{gauge}$ from the measuring device 210 and calculates the difference between the first charging capacity

$Q_{charger}$ and the second charging capacity $Q_{gauge}$, e.g., at a predetermined time interval. If the difference is less than the second predetermined threshold $Q_2$, the charging status control unit 308 generates a signal SIN at a first level, e.g., at logic high, which means that there is no need to amend the second charging capacity $Q_{gauge}$. If the difference is great than the second predetermined threshold $Q_2$, the charging status control unit 308 generates the signal SIN at a second level, e.g., at logic low, which means that there is a need to amend the second charging capacity $Q_{gauge}$. Moreover, the capacity calculation unit 306 transmits the third charging capacity $Q_{control}$ to the measuring device 210.

In addition, the controller 208 according to one embodiment of the present teaching may further include a multiple safety level control unit 304. The multiple safety level control unit 304 of this embodiment is configured for determining whether any abnormality has occurred during the charging process based on the charging information (e.g., the charging voltage, the charging current and the battery temperature) and for performing corresponding operations if any abnormality has occurred. In an embodiment, multiple determining standards can be predetermined and stored in the multiple safety level control unit 304. The multiple safety level control unit 304 can make a determination based on each of the determining standards and perform one or more operations which are related with the determining standards.

In one embodiment, the multiple safety level control unit 304 receives information from the voltage detecting unit 216 indicating the charging voltage U and compares the charging voltage U with a predetermined voltage $U_{ref}$. If the charging voltage U is greater than the predetermined voltage $U_{ref}$, the multiple safety level control unit 304 disconnects the wireless charger 204 from the battery pack 214 and turns off the measuring device 210. Then the multiple safety level control unit 304 restarts the voltage detecting unit 216. Moreover, multiple predetermined voltages such as $U_{ref1}$, $U_{ref2}$,..., $U_{refN}$ for comparing with the charging voltage U can be predetermined to achieve a safe detection with multiple determining standards of charging voltage.

In addition, the multiple safety level control unit 304 of this embodiment may receive information from the current detecting unit 218 indicating the charging current I and compares the charging current I with a predetermined current $I_{ref}$. In one embodiment, if the charging current I is greater than the predetermined current $I_{ref}$, the multiple safety level control unit 304 disconnects the wireless charger 204 from the battery pack 214 and turns off the measuring device 210. Then the multiple safety level control unit 304 restarts the current detecting unit 216. In another embodiment, if the charging current I is greater than the predetermined current $I_{ref}$, the multiple safety level control unit 304 reduces the charging current to the predetermined current $I_{ref}$ and restarts the current detecting unit 218. Moreover, multiple predetermined currents such as $I_{ref1}$, $I_{ref2}$,... $I_{refN}$ for comparing with the charging current I can be predetermined to achieve a safe detection with multiple determining standards of charging current.

Moreover, the multiple safety level control unit 304 of one embodiment calculates the temperatures $TEMP_1$, $TEMP_2$, $TEMP_n$ of each battery cell in the battery pack 214 based on temperature information from thermal resistors (not shown in FIG. 2) attached on both terminals of each battery cell, where n represents the number of battery cells in the battery pack 214. The multiple safety level control unit 304 compares the received temperatures with a predetermined temperature $T_{ref}$. If any one of temperatures $TEMP_1$, $TEMP_2$, $TEMP_n$ is greater than the predetermined temperature $T_{ref}$, the multiple safety level control unit 304 disconnects the wireless charger 204 from the battery pack 214 and turns off the measuring device 210. Then the multiple safety level control unit 304 restarts the temperature detecting unit 220. Moreover, multiple predetermined temperatures such as $T_{ref1}$, $T_{ref2}$, .. $T_{refN}$ for comparing with the charging temperatures $TEMP_1$, $TEMP_2$,...$TEMP_n$ can be predetermined to achieve a safe detection with multiple determining standards of charging temperature.

In accordance with various embodiments of present teaching, during a charging process, a safer charging operation can be achieved by detecting the charging information such as the charging voltage, charging current and temperature and determining whether any abnormality has occurred based on multiple determining standards.

According to one embodiment, if the battery pack 214 is in the charging process (e.g., is being charged), when a sum of the remaining capacity $Q_{remain}$ measured at the beginning of the charging process and the second charging capacity $Q_{gauge}$ calculated by the measuring device 210 during the charging process reaches a rated full capacity $Q_{full}$, the charging status control unit 308 disconnects the wireless charger 204 from the battery pack 214 to stop the charging process. The second charging capacity $Q_{gauge}$ calculated by the measuring device 210 can be amended by the controller 208 if the difference between the first charging capacity $O_{charger}$ and the second charging capacity $Q_{gauge}$ is greater than the second threshold $Q_2$.

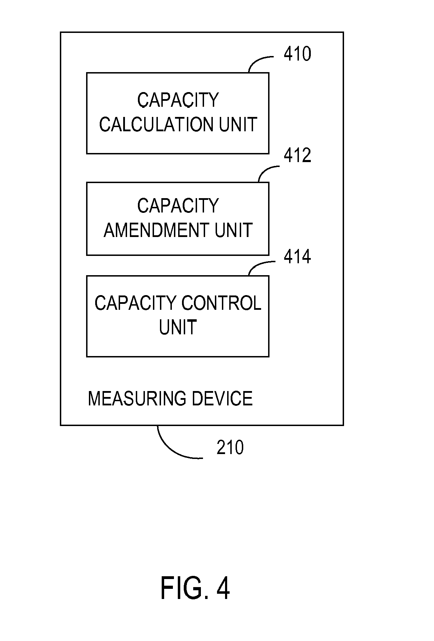

FIG. 4 illustrates an exemplary block diagram of the measuring device 210 in FIG. 2, in accordance with an embodiment of the present teaching. Elements that are labeled with the same numerals in FIGs. 2 and 4 have similar functions. FIG. 4 may be described in combination with FIG. 2. As shown in FIG. 4, the measuring device 210 includes a capacity calculation unit 410, a capacity amendment unit 412 and a capacity control unit 414. The capacity calculation unit 410 is configured for calculating the remaining capacity $O_{remain}$ of the battery pack 214. The capacity calculation unit 410 can further determine whether the battery pack 214 is being charged or not. If the capacity calculation unit 410 determines that the battery pack 214 is not being charged, which means that the wireless charger 204 is not in operation, the measuring device 210 receives power from the battery pack 214. When the remaining capacity $Q_{remain}$ of the battery pack 214 drops below the first threshold $Q_1$, the capacity control unit 414 shuts down the whole battery system 200.

If the capacity calculation unit 410 determines that the battery pack 214 is being charged, meaning that the wireless charger 204 is in operation, the measuring device 210 receives power from the wireless charger 204. The wireless charger 204 calculates the first charging capacity $O_{charger}$. The capacity calculation unit 410 calculates the second charging capacity $Q_{gauge}$.

If the difference between the first charging capacity $O_{charger}$ and the second charging capacity $Q_{gauge}$ is less than the second threshold $Q_2$, the capacity amendment unit 412 receives the signal SIN with the first level, e.g., the logic high, from the charging status control unit 308 in the controller 208. The signal SIN with the first level indicates that there is no need to amend the second charging capacity $Q_{gauge}$ calculated by the measuring device 210. If the difference between the first charging capacity $Q_{charger}$ and the second charging capacity $Q_{gauge}$ is greater than the second threshold $Q_2$, the capacity amendment unit 412 receives the signal SIN with the second level, e.g., the logic low, from the charging status control unit 308. The signal SIN with the second level indicates that there is a need to amend the second charging capacity $Q_{gauge}$ calculated by the measuring device 210. Then the capacity amendment unit 412 receives the third charging capacity $Q_{control}$ from the capacity calculation unit 306 in the controller 208 and transmits the third charging capacity $Q_{control}$ to the capacity calculation unit 410 in the measuring device 210 to amend the second charging capacity $Q_{gauge}$. In an embodiment, the capacity calculation unit 410 amends the second charging capacity $Q_{gauge}$ by replacing a value of the second charging capacity $Q_{gauge}$ with a value of the third charging capacity $Q_{control}$.

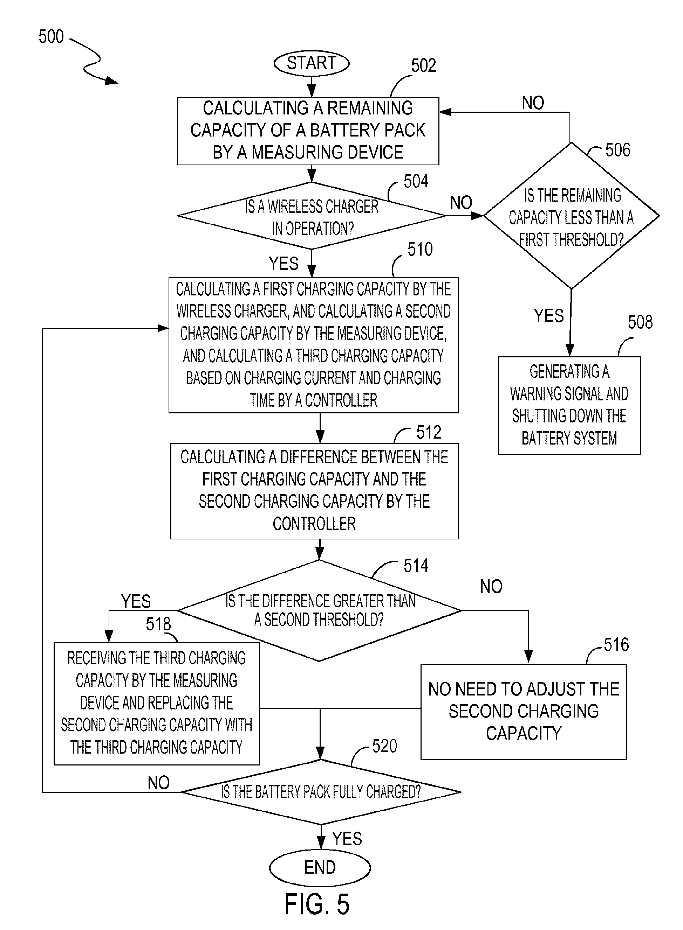

FIG. 5 is a flowchart illustrating a method 500 for controlling a battery system, in accordance with an embodiment of the present teaching. FIG. 5 may be described in combination with FIG. 2.

At 502, a measuring device 210 calculates a remaining capacity $Q_{remain}$ of a battery pack 214. At 504, the measuring device 210 detects status of a wireless charger 204. Moving to 506, if the wireless charger 204 is not in operation (that is the wireless charger 204 does not charge the battery pack 214), the measuring device 210 determines that whether the remaining capacity $Q_{remain}$ of the battery pack 214 is less than a first threshold. If the remaining capacity $Q_{remain}$ of the battery pack 214 is less than the first threshold, the process goes to 508. Otherwise, if the remaining capacity $Q_{remin}$ of the battery pack 214 is greater than the first threshold, the process goes back to 502.

At 508, a controller 208 generates a warning signal. The measuring device 210 shuts down the battery system 200. At 510, if the wireless charger 204 is in operation (e.g., the wireless charger 204 is charging the battery pack 214), each of the wireless charger 204 and the measuring device 210 calculates a charging capacity of the battery pack 214. The charging capacity calculated by the wireless charger 204 is a first charging capacity $Q_{charger}$. The charging capacity calculated by the measuring device 210 is a second charging capacity $Q_{gauge}$. The controller 208 calculates a third charging capacity $Q_{control}$ based on charging current, charging time acquired by a detecting module 206.

At 512, the controller 208 calculates a difference between the first charging capacity $Q_{charger}$ and the second charging capacity $Q_{gauge}$. At 514, the controller 208 compares the difference with a second threshold and determines whether the difference is greater than the second threshold. If the difference between the first charging capacity $Q_{charger}$ and the second charging capacity $Q_{gauge}$ is less than the second threshold, the process goes to 516. Otherwise, if the difference is greater than the second threshold, the process goes to 518. At 516, the controller 208 determines that there is no need to amend the second charging capacity $Q_{gauge}$ Then the process goes to 520. At 518, the controller 208 determines that there is a need to amend the second charging capacity $Q_{gauge}$. The measuring device 210 receives the third charging capacity $Q_{control}$ from the controller 208 and replaces the second charging capacity $Q_{gauge}$ with the third charging capacity $Q_{control}$ to amend the second charging capacity $O_{gauge}$. Then the process goes to 520.

At 520, the measuring device 210 checks whether the battery pack 214 is fully charged. If the battery pack is fully charged, the measuring device 210 shuts down the wireless charger 204 to end the charging process. If not, the process goes back to the 510.

In addition, the method 500 may further include detecting charging information which includes at least one of charging voltage, charging current, charging time and charging temperature during the charging process and determining whether any abnormality has occurred based on the charging information. Moreover, multiple determining standards can be predetermined according to requirements of difference users. Then corresponding operations according to each determining standard may be performed.

Accordingly, the present teaching provides a battery system, a controller and method for control a battery system. During the charging process, the battery system compares a first charging capacity calculated by a wireless charger with a second charging capacity calculated by a measuring device and amends the second charging capacity if a difference between the first charging capacity and the second charging capacity is greater than a threshold to make sure the charging capacity stored in the measuring device is accurate. Users can manage the charging process and estimate the charging time more precisely. Overcharging or undercharging of the battery pack can also be avoided. Moreover, the measuring device can calculate a remaining capacity of the battery and thus users can still know the remaining capacity of the battery when the battery is not being charged. It is convenient for users to store data and charge or replace battery timely. In addition, with multiple detecting standards, a safer detection of battery abnormality is achieved.

Those skilled in the art will recognize that the embodiments of the present teaching are amenable to a variety of modifications an/or enhancements. For example, although the implementation of various components described above may be embodied in a hardware device, it can also be implemented as a software only solution e.g., an installation on an existing server. In addition, the dynamic relation/event detector and its components as disclosed herein can be implemented as firmware, a firmware/software combination, a firmware/hardware combination, or a hardware/firmware/software combination.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

**Claims**

1. A system comprising:

   a battery pack;
   a wireless charger configured for charging the battery pack, and calculating a first charging capacity of the battery pack;
   a detecting module coupled to the wireless charger and configured for detecting information associated with the charging;
   a measuring device configured for calculating a second charging capacity of the battery pack; and
   a controller coupled to the wireless charger, the detecting module and the measuring device, and configured for
   determining whether there is a difference between the first charging capacity and the second charging capacity,
   calculating a third charging capacity of the battery pack based on the difference and the information associated with the charging, and
   adjusting the second charging capacity based on the third charging capacity.

2. The system of claim 1, wherein the controller is configured for calculating the difference between the first charging capacity and the second charging capacity, determining whether the difference is greater than a threshold, and transmitting the third charging capacity to the measuring device to adjust the second charging capacity if the difference is greater than the threshold.

3. The system of claim 1 or 2, wherein the measuring device is configured for receiving the third charging capacity from the controller, and replacing a value of the second charging capacity with a value of the third charging capacity to adjust the second charging capacity.

4. The system of claim 1, 2 or 3, wherein the charging information comprises charging time and charging current, and the controller is configured for calculating the third charging capacity based on the charging time and the charging current.

5. The system of one of claims 1 to 4, wherein if the measuring device detects that the wireless charger is charging the battery pack, the wireless charger is configured for calculating the first charging capacity, and the measuring device is configured for calculating the second charging capacity.

6. The system of one of claims 1 to 5, wherein if the measuring device detects that the wireless charger is not charging the battery pack and if a remaining capacity of the battery pack is less than a threshold, the measuring device is configured for shutting down the battery system.

7. The system of one of claims 1 to 6, wherein the charger comprises:

   a multiple safety level control unit configured for determining whether any abnormality has occurred based on the charging information and for performing one or more corresponding operations if any abnormality has occurred.

8. The system of claim 7, wherein multiple determining standards are predetermined and stored in the multiple safety level control unit, and the multiple safety level control unit is configured for making a determination based on each of the multiple determining standards and for performing one or more corresponding operations.

9. A method for controlling a battery system, comprising:

calculating a first charging capacity;
calculating a second charging capacity when a battery pack in the battery system is being charged;
calculating a difference between the first charging capacity and the second charging capacity; and
adjusting the second charging capacity when the difference is greater than a threshold.

10. The method of claim 9, wherein adjusting the second charging capacity comprises:

calculating a third charging capacity for adjusting the second charging capacity based on charging current and charging time by a controller in the battery system.

11. The method of claim 10, wherein adjusting the second charging capacity comprises:

receiving the third charging capacity from the controller; and
replacing the second charging capacity with the third charging capacity when the difference is greater than the threshold.

12. The method of claim 9, 10, or 11, further comprising:

shutting down the battery system if the battery pack is not being charged and if a remaining capacity of the battery pack is below a second threshold.

13. The method of one of claims 9 to 12, further comprising:

detecting charging information; and
determining whether any abnormality has occurred based on the charging information, wherein the charging information comprises at least one of charging voltage, charging current, charging time and temperature of the battery pack during the charging process.

14. The method of one of claims 9 to 12, further comprising:

determining multiple determining standards;
determining whether any abnormality has occurred based on each of the multiple determining standards; and
performing one or more corresponding operations if any abnormality has occurred.

15. A controller for controlling a battery system according to claim 1, comprising:

a determining unit configured for
calculating the difference between the first charging capacity calculated by the wireless charger in the battery system and the second charging capacity calculated by the measuring device coupled to the controller, and
determining whether the difference is greater than the threshold, if the wireless charger is charging a battery pack in the battery system; and
a capacity calculation unit configured for
calculating the third charging capacity based on information associated with the charging, and adjusting the second charging capacity based on the third charging capacity if the determining unit determines that the difference is greater than the threshold.

16. The controller of the claim 15, wherein the measuring device is configured for using the third charging capacity to replace the second charging capacity when the difference between the first charging capacity and the second charging capacity is greater than the threshold.

17. The controller of the claim 15 or 16, wherein the controller is configured for generating a warning signal indicating that the battery system is about to shut down if the battery pack is not during a charging process and if a remaining capacity of the battery pack is less than a second threshold.

18. The controller of the claim 15, 16 or 17, wherein the controller further comprises:

a multiple safety level control unit configured for determining whether any abnormality has occurred and for performing one or more corresponding operations.

19. The controller of the claim 18, wherein
multiple determining standards are predetermined and stored in the multiple safety level control unit, and
the multiple safety level control unit is configured for determining whether any abnormality has occurred based on each of the multiple determining standards and for performing one or more corresponding operations if any abnormality has occurred.

EP 2 837 943 A1

FIG. 1

FIG. 2

EP 2 837 943 A1

FIG. 3

FIG. 4

500

START

502
CALCULATING A REMAINING
CAPACITY OF A BATTERY PACK
BY A MEASURING DEVICE

504
IS A WIRELESS CHARGER
IN OPERATION?

NO → 506
IS THE REMAINING
CAPACITY LESS THAN A
FIRST THRESHOLD?

NO

YES

YES ↓ 508
GENERATING A
WARNING SIGNAL AND
SHUTTING DOWN THE
BATTERY SYSTEM

510
CALCULATING A FIRST CHARGING CAPACITY BY THE
WIRELESS CHARGER, AND CALCULATING A SECOND
CHARGING CAPACITY BY THE MEASURING DEVICE,
AND CALCULATING A THIRD CHARGING CAPACITY
BASED ON CHARGING CURRENT AND CHARGING
TIME BY A CONTROLLER

512
CALCULATING A DIFFERENCE BETWEEN THE
FIRST CHARGING CAPACITY AND THE
SECOND CHARGING CAPACITY BY THE
CONTROLLER

514
IS THE DIFFERENCE GREATER THAN
A SECOND THRESHOLD?

YES
518
RECEIVING THE THIRD CHARGING
CAPACITY BY THE MEASURING
DEVICE AND REPLACING THE
SECOND CHARGING CAPACITY WITH
THE THIRD CHARGING CAPACITY

NO
516
NO NEED TO ADJUST THE
SECOND CHARGING
CAPACITY

520
IS THE BATTERY PACK FULLY CHARGED?

NO

YES

END

FIG. 5

EP 2 837 943 A1

## EUROPEAN SEARCH REPORT

Application Number

EP 13 18 0695

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/105595 A2 (ACCESS BUSINESS GROUP INT LLC [US]; BAARMAN DAVID W [US]; NORCONK MATT) 27 August 2009 (2009-08-27) * page 4, line 18 - line 19 * * page 8 - page 14 * * figures 1-3,7 * | 1-8, 12-19 | INV. G01R31/36 H02J7/02 |
| X | US 2009/254290 A1 (KIM WOO SUNG [KR] ET AL) 8 October 2009 (2009-10-08) | 9-11 | |
| Y | * paragraphs [0008], [0018] - [0021], [0036] - [0044] * * figures 1-3 * * claims 1,3,4 * | 1-8, 12-19 | |
| X | WO 2012/098770 A1 (CALSONIC KANSEI CORP [JP]; UNIV KEIO [JP]; BABA ATSUSHI [JP]; ADACHI S) 26 July 2012 (2012-07-26) | 9-11 | |
| Y | * abstract * * figures 1,2,7 * | 1-8, 12-19 | |
| Y | EP 1 465 316 A2 (MAKITA CORP [JP]) 6 October 2004 (2004-10-06) * claim 2 * * paragraphs [0003], [0009], [0017] * | 6,12 | TECHNICAL FIELDS SEARCHED (IPC) G01R H02J |
| A | JP 2012 088157 A (MITSUBISHI MOTORS CORP) 10 May 2012 (2012-05-10) * abstract; figure 3 * | 1,9 | |
| A | WO 2013/002343 A1 (SANYO ELECTRIC CO [JP]; NAKASHIMA TAKESHI [JP]; SUGIGAKI CHIE [JP]) 3 January 2013 (2013-01-03) * abstract; figure 5 * | 1,9 | |
| A | WO 2010/140230 A1 (MITSUBISHI HEAVY IND LTD [JP]; KYUSHU ELECTRIC POWER [JP]; SHIGEMIZU T) 9 December 2010 (2010-12-09) * abstract; figure 1 * | 1,9 | |

-/--

The present search report has been drawn up for all claims

| Place of search | Date of completion of the search | Examiner |
|---|---|---|
| Munich | 20 January 2014 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

Application Number

EP 13 18 0695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/212178 A1 (KIM JAE KI [KR]) 23 August 2012 (2012-08-23) * the whole document * ----- | 1-8, 15-19 | |
| A | EP 2 066 001 A2 (JUNG CHUN-KIL [KR]) 3 June 2009 (2009-06-03) * the whole document * ----- | 1-8, 15-19 | |

TECHNICAL FIELDS
SEARCHED       (IPC)

The present search report has been drawn up for all claims

| Place of search | Date of completion of the search | Examiner |
|---|---|---|
| Munich | 20 January 2014 | Chabas, Julien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 18 0695

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2014

| Patent document cited in search report | | Publication date | Patent family member(s) | | Publication date |
|---|---|---|---|---|---|
| WO 2009105595 | A2 | 27-08-2009 | AU | 2009215446 A1 | 27-08-2009 |
| | | | CA | 2715916 A1 | 27-08-2009 |
| | | | CN | 102017356 A | 13-04-2011 |
| | | | EP | 2258033 A2 | 08-12-2010 |
| | | | JP | 2011514129 A | 28-04-2011 |
| | | | KR | 20100122934 A | 23-11-2010 |
| | | | RU | 2010138844 A | 27-03-2012 |
| | | | TW | 201004086 A | 16-01-2010 |
| | | | US | 2009212736 A1 | 27-08-2009 |
| | | | US | 2012133324 A1 | 31-05-2012 |
| | | | WO | 2009105595 A2 | 27-08-2009 |
| US 2009254290 | A1 | 08-10-2009 | CN | 101551444 A | 07-10-2009 |
| | | | DE | 102008041741 A1 | 15-10-2009 |
| | | | JP | 5294448 B2 | 18-09-2013 |
| | | | JP | 2009250970 A | 29-10-2009 |
| | | | KR | 20090105754 A | 07-10-2009 |
| | | | US | 2009254290 A1 | 08-10-2009 |
| WO 2012098770 | A1 | 26-07-2012 | CN | 103328997 A | 25-09-2013 |
| | | | EP | 2667211 A1 | 27-11-2013 |
| | | | JP | 5318128 B2 | 16-10-2013 |
| | | | JP | 2012149947 A | 09-08-2012 |
| | | | US | 2013297243 A1 | 07-11-2013 |
| | | | WO | 2012098770 A1 | 26-07-2012 |
| EP 1465316 | A2 | 06-10-2004 | EP | 1465316 A2 | 06-10-2004 |
| | | | JP | 3980509 B2 | 26-09-2007 |
| | | | JP | 2004312789 A | 04-11-2004 |
| | | | US | 2004239293 A1 | 02-12-2004 |
| JP 2012088157 | A | 10-05-2012 | NONE | | |
| WO 2013002343 | A1 | 03-01-2013 | NONE | | |
| WO 2010140230 | A1 | 09-12-2010 | NONE | | |
| US 2012212178 | A1 | 23-08-2012 | KR | 20120094738 A | 27-08-2012 |
| | | | US | 2012212178 A1 | 23-08-2012 |
| EP 2066001 | A2 | 03-06-2009 | EP | 2066001 A2 | 03-06-2009 |
| | | | EP | 2683051 A2 | 08-01-2014 |
| | | | EP | 2683054 A2 | 08-01-2014 |
| | | | JP | 2009136133 A | 18-06-2009 |
| | | | US | 2009140691 A1 | 04-06-2009 |
| | | | US | 2013300355 A1 | 14-11-2013 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 13 18 0695

This annex lists the patent family members relating to the patent documents cited in  the above-mentioned European search report.
The members are as contained in the European Patent Office EDP file on
The European Patent Office is in no way liable for these particulars which are merely given for the purpose of information.

20-01-2014

| Patent document cited in search report | Publication date | Patent family member(s) | | Publication date |
|---|---|---|---|---|
| | | WO | 2009069844 A1 | 04-06-2009 |

For more details about this annex : see Official Journal of the European Patent Office, No. 12/82